# FASCICULE DE BREVET EUROPEEN

(11) **EP 3 234 045 B1**
(45) Date de publication et mention de la délivrance du brevet: **13.02.2019**
(21) Numéro de dépôt: 15823642.2
(22) Date de dépôt: 14.12.2015
(51) Int. Cl.: C09D 13/00, B43K 19/02, B43K 19/18

(54) **MINE DE CRAYON DE COULEUR**
FARBSTIFTMINE
COLOUR PENCIL LEAD

(30) Priorité: 17.12.2014 FR 1462665
(43) Date de publication de la demande: 25.10.2017
(73) Titulaire: Conte, 62200 Boulogne sur Mer (FR)
(72) Inventeur: CLAPTIEN, Frédéric D, 62830 Samer (FR); GOUEREC, Julien, 62360 La Capelle-les-Boulogne (FR); LEFEBVRE, Philippe, 62930 Wimereux (FR)
(74) Mandataire: Mendelsohn, Isabelle M. N.
(86) Numéro de dépôt international: PCT/FR2015/053469
(87) Numéro de publication internationale: WO 2016/097555

(56) Documents cités:
- EP-A1- 2 520 442
- FR-A1- 2 674 179
- US-A- 3 409 574

## Description

La présente invention concerne les mines à base de polymère pour crayons de couleur extrudables et ayant une facilité de gommage améliorée.

Il est difficile de fabriquer des mines pour crayons de couleur ayant une bonne facilité de gommage. En effet, en général les mines se gommant facilement n'ont pas une intensité de couleur satisfaisante entre la marque laissée sur le support et le support. La demande WO 00/00557 tente de résoudre ce problème en utilisant un matériau susceptible d'être fibrillé ou fibrillé et en évitant l'utilisation de cires ou de matière analogue de cires tels que des stéarates qui adhèrent à et résiste à leur enlèvement des fibres de papier. Toutefois la composition ainsi obtenue est difficile à mettre en oeuvre. En outre la mine ainsi obtenue a un coût de fabrication élevée, produit un dépôt discontinu sur le papier lié à la très forte cohésion du mélange et manque de douceur.

Il est donc nécessaire de trouver une nouvelle façon pour résoudre le problème de l'obtention de mines ayant une facilité de gommage améliorée, sans que cette mine ne rencontre les problèmes de l'art antérieur.

Or les inventeurs ont découvert de façon surprenante qu'il était possible d'obtenir une telle mine en utilisant des proportions judicieusement choisies de pigment enrobé ou mélangé avec une cire de polyoléfine, de charge minérale incolore, de stéarate de magnésium et/ou de calcium et de polyoléfine.

Le brevet US3409574 décrit dans son exemple 7 une mine de crayon de couleur comprenant du polyéthylène, de la cire de paraffine, de la cire microcristalline, du stéarate de calcium, un pigment et une charge minérale (talc, kaolin). Toutefois, cette composition ne comprend pas de cire de polyoléfine et en particulier de pigment enrobé ou mélangé au préalable avec une cire de polyoléfine avant son incorporation dans la composition.

En outre la composition comprend toujours un plastifiant. Or la douceur sur le papier est meilleure avec un pigment enrobé par une cire de polyoléfine plutôt que par une polyoléfine. D'autre part, la dispersion dans le mélange et donc l'homogénéité et la vivacité de la teinte sont meilleures avec l'utilisation d'un enrobage cire de polyoléfine.

La présente invention concerne donc une mine de crayon de couleur, extrudable, non expansée, comprenant, avantageusement étant constituée par, en poids par rapport au poids total de la mine :
- entre 25 et 45 %, avantageusement entre 30 et 40 %, d'une polyoléfine;
- entre 25 et 50 %, avantageusement entre 30 et 40 %, d'une charge minérale incolore ;
- entre 5 et 20 %, avantageusement entre 5 et 15 %, d'un pigment enrobé par ou mélangé avec une cire de polyoléfine;
- entre 0 et 10 %, avantageusement entre 3 et 10 %, d'un additif et
- entre 10 et 30 %, avantageusement entre 15 et 25 % de stéarate choisi parmi le stéarate de magnésium, le stéarate de calcium et leur mélange.

Une telle mine de crayon de couleur présente l'avantage d'une bonne facilité de gommage et d'une intensité de couleur satisfaisante, tout en gardant des propriétés mécaniques suffisantes pour éviter que la mine ne se casse lors de son utilisation ou lorsqu'on la taille.

La mine selon la présente invention appartient donc à la catégorie des mines de crayons de couleur à base polymère, ici à base de polyoléfine. La mine selon la présente invention est extrudable, c'est-à-dire qu'elle peut être obtenue par extrusion. De façon avantageuse elle est extrudée. La mine selon la présente invention est non expansée. Ainsi donc aucun agent d'expansion n'est utilisé lors de son procédé de fabrication. En outre la polyoléfine utilisée n'est pas expansée.

La mine selon la présente invention est une mine de crayon de couleur, c'est-à-dire destinée à être utilisée dans des crayons de couleur, en particulier dans des crayons de couleur enrobé de bois ou de matière synthétique de bois, comprenant éventuellement une couche intermédiaire de protection, en particulier tels que décrits dans la demande de brevet WO01/43987.

La mine de crayon de couleur selon la présente invention comprend entre 25 et 45 % en poids d'une polyoléfine par rapport au poids total de la mine, avantageusement entre 30 et 40 % en poids d'une polyoléfine par rapport au poids total de la mine, plus avantageusement entre 31 et 37 % en poids d'une polyoléfine par rapport au poids total de la mine, encore plus avantageusement entre 32 et 36 % en poids d'une polyoléfine par rapport au poids total de la mine.

La polyoléfine est le principal polymère de la mine. De façon encore plus avantageuse la mine ne comprend pas d'autres polymères. Avantageusement la polyoléfine peut-être du polyéthylène ou du polypropylène, en particulier il s'agit du polypropylène, plus particulièrement du polypropylène homopolymère.

La polyoléfine permet de rendre la mine extrudable et de lui conférer de bonnes propriétés mécaniques de résistante à la flexion.

La mine de crayon de couleur selon la présente invention comprend de plus entre 25 et 50 % en poids d'une charge minérale incolore par rapport au poids total de la mine, avantageusement entre 30 et 40 % en poids d'une charge minérale incolore par rapport au poids total de la mine, plus avantageusement entre 31 et 38 % en poids d'une charge minérale incolore par rapport au poids total de la mine, encore plus avantageusement entre 33 et 37 % en poids d'une charge minérale incolore par rapport au poids total de la mine.

Dans un mode de réalisation avantageux la charge minérale incolore est choisie parmi une argile, du talc, du nitrure de bore, de la silice, du carbonate de calcium, du mica, de la poudre de stéatite et leurs mélanges. Avantageusement il s'agit d'une charge minérale incolore lamellaire, plus particulièrement choisie parmi une argile, du nitrure de bore, du mica et/ou du talc, par exemple une argile en particulier choisie parmi la montmorillonite, la bentonite et le kaolin. Plus particulièrement il s'agit du kaolin, en particulier du kaolin ayant une taille de particules D50 en masse mesurée par sédimentation par exemple en utilisant un appareil SEDIGPAPH® de la société Micromeritics, comprise entre 2 et 5 µm.

La silice et le talc ont pour but d'apporter des propriétés mécaniques à la mine, telle que la résistance à la flexion et/ou la résistance à la rupture. Les charges minérales lamellaires ont pour but d'apporter de la douceur lors de l'écriture et de maintenir une structure qui se délite sur le papier à l'image des feuillets de graphite.

La mine de crayon de couleur selon la présente invention comprend en outre entre 4 et 20 % en poids d'un pigment enrobé par ou mélangé avec une cire de polyoléfine par rapport au poids total de la mine, avantageusement entre 5 et 15 % en poids d'un pigment enrobé par ou mélangé avec une cire de polyoléfine par rapport au poids total de la mine, plus avantageusement entre 5,5 et 13 % en poids d'un pigment enrobé par ou mélangé avec une cire de polyoléfine par rapport au poids total de la mine, encore plus avantageusement entre 5,5 et 10 % en poids d'un pigment enrobé par ou mélangé avec une cire de polyoléfine par rapport au poids total de la mine.

Le pigment ou le mélange de pigment utilisé peut donc être enrobé ou mélangé avec une cire de polyoléfine (par exemple sous forme d'un mélange maître, d'une préparation pigmentaire ou d'une dispersion de pigment dans une cire de polyoléfine).

Le pigment permet d'apporter la couleur à la mine alors que la cire de polyoléfine permet d'améliorer la facilité de gommage puisqu'elle évite au pigment de pénétrer le support sur lequel est réalisée la marque avec la mine selon la présente invention. Le pigment est donc préalablement enrobé par ou mélangé avec une cire de polyoléfine, avant son ajout dans la composition de la mine, composition qui comprend elle-même une polyoléfine.

De façon avantageuse la polyoléfine de la cire de polyoléfine est du polypropylène ou du polyéthylène ou leur mélange, avantageusement il s'agit de polyéthylène, par exemple de polyéthylène basse densité.

Dans un mode de réalisation particulier la teneur en pigment du pigment enrobé par ou mélangé avec une cire de polyoléfine est compris entre 25 et 65 % en poids, avantageusement entre 30 et 60 % en poids, par rapport au poids total du pigment enrobé par ou mélangé avec une cire de polyoléfine.

Dans un mode de réalisation particulièrement avantageux, le pigment utilisé dans la mine selon la présente invention est le pigment enrobé par une cire de polyoléfine. Avantageusement, dans ce cas, la teneur en pigment du pigment enrobé par une cire de polyoléfine est comprise entre 40 et 65 % en poids par rapport au poids total du pigment enrobé par une cire de polyoléfine, avantageusement entre 50 et 60 % en poids par rapport au poids total du pigment enrobé par une cire de polyoléfine.

De façon avantageuse la cire de polyoléfine est une cire de polypropylène ou de polyéthylène ou de leur mélange, avantageusement il s'agit d'une cire de polyéthylène, par exemple de polyéthylène basse densité.

Selon la couleur de la mine désirée, le pigment est un pigment rouge, noir, jaune, orange, bleu, magenta, violet et leurs mélanges.

Avantageusement le pigment enrobé par une cire de polyoléfine est disponible commercialement auprès de la société SunChemical sous la dénomination Sunfast® PE Flush Black L47-9000, Flush Rouge 48 :2 L34-1209, Flush Jaune 14 L74 - 1357, Flush Bleu 15/3 L49 -0714, Flush Violet 23 L46-4568, Orange Predisol L76P282, Predisol Magenta 122 L28P213 et leurs mélanges.

La mine de crayon de couleur selon la présente invention comprend en outre du stéarate choisi parmi le stéarate de magnésium, le stéarate de calcium et leur mélange, en particulier du stéarate de calcium, en une teneur comprise entre 10 et 30 % en poids par rapport au poids total de la mine, avantageusement comprise entre 15 et 25 % en poids par rapport au poids total de la mine, plus avantageusement en une teneur comprise entre 17 et 20 % en poids par rapport au poids total de la mine. Le stéarate de calcium ou de magnésium permet d'apporter de la douceur et du glissant sur le papier.

La mine de crayon de couleur selon la présente invention peut comprendre un additif, en une teneur comprise entre 0 et 10 % en poids par rapport au poids total de la mine, avantageusement comprise entre 2 et 10 % en poids par rapport au poids total de la mine, plus avantageusement en une teneur comprise entre 3 et 8 % en poids par rapport au poids total de la mine.

Cet additif peut être choisi parmi les additifs bien connus de l'homme du métier dans le domaine des mines pour crayon de couleur, en particulier parmi les agents glissant, les agents de mise en oeuvre, les agents de couplage, les autres pigments (c'est-à-dire non mélangés ou enrobés par une cire de polyoléfine), les agents dispersants, les lubrifiants et leurs mélanges, avantageusement parmi le stéarate de zinc, une amide, en particulier une stéaramide telle que l'éthylène bis stéaramide, les cires, les acides gras, le glycérol et ses dérivés tel que le béhénate de glycérol, le dibéhénate de glycérol, le stéarate de glycérol et/ou le diisostéarate de polyglycérol, le siloxane greffé sur du polypropylène, le titane rutile, le polypropylène greffé anhydride maléique et leurs mélanges, plus avantageusement le stéarate de zinc, l'éthylène bis stéaramide, le titane rutile et leurs mélanges.

De façon avantageuse la mine selon la présente invention comprend du stéarate de zinc, en particulier en une teneur comprise entre 1 et 5 % en poids, de façon avantageuse entre 1,5 et 2,5 % en poids, par rapport au poids total de la mine. Le stéarate de zinc est un agent de mise en oeuvre de la mine selon la présente invention. Il permet d'améliorer le procédé de fabrication par extrusion.

Dans un autre mode de réalisation avantageux, la mine selon la présente invention comprend une amide, en particulier une stéaramide telle que l'éthylène bis stéaramide, avantageusement en une teneur comprise entre 0,5 et 3 % en poids, de façon avantageuse entre 1 et 2,5 % en poids, par rapport au poids total de la mine. L'amide permet d'aider à la dispersion des charges dans la composition et a également un léger effet positif sur le glissant.

La mine selon la présente invention peut également comprendre du titane rutile, avantageusement en une teneur comprise entre 0 et 6 % en poids, plus avantageusement entre 1 et 5 % en poids, par rapport au poids total de la mine. Le titane rutile permet d'apporter de la couleur à la mine selon la présente invention.

Dans un mode de réalisation particulièrement avantageux, la mine de crayon de couleur selon la présente invention ne comprend pas de plastifiant.

Dans un autre mode de réalisation avantageux, la mine de crayon de couleur selon la présente invention ne comprend pas d'huile de palme. Dans un autre mode de réalisation avantageux, la mine de crayon de couleur selon la présente invention ne comprend pas de matériau susceptible d'être fibrillé ou fibrillé tel que défini et décrit dans la demande de brevet WO 00/00557.

Dans un mode de réalisation particulier de la présente invention, la mine a un diamètre compris entre 2 et 3,6 mm, de façon avantageuse il s'agit d'une mine ayant un diamètre compris entre 2,8 et 3,2 mm.

La mine selon la présente invention peut être fabriquée par des procédés bien connus de l'homme du métier.

Par exemple tous les composants sont mélangés entre eux et le mélange obtenu est extrudé aux températures adéquates. La mine obtenue est ensuite refroidie.

La mine selon la présente invention a donc une intensité de couleur suffisante tout en possédant de bonnes propriétés mécaniques, en particulier de résistance à la flexion et/ou de résistance aux chocs, et en présentant une facilité de gommage améliorée. En outre la mine produit un dépôt continu sur le papier et possède une certaine douceur.

La présente invention concerne également un crayon de couleur comprenant une mine selon la présente invention, en particulier un crayon de couleur enrobé de bois ou de matière synthétique de bois, comprenant éventuellement une couche intermédiaire de protection, par exemple tel que décrit dans la demande de brevet WO01/43987.

De façon avantageuse le crayon de couleur est obtenu par coextrusion de la mine et de la matière synthétique de bois et éventuellement de la couche intermédiaire de protection.

En particulier la matière synthétique de bois est à base de polymère styrénique et la couche intermédiaire de protection joue également le rôle de couche d'adhésion et peut avantageusement comprendre un mélange d'EVA et de polystyrène.

De façon avantageuse la matière synthétique de bois est expansée, afin de présenter une densité équivalente au bois naturel.

Avantageusement le crayon de couleur selon la présente invention peut avoir une section hexagonale, ronde ou triangulaire, avantageusement ronde ou hexagonale.

Da façon avantageuse, il peut comporter un moyen pour effacer, telle qu'une gomme, à l'extrémité non taillée du crayon.

L'invention sera mieux comprise à la lecture de la description des exemples qui suivent qui sont donnés à titre indicatif non limitatif.

### Exemple 1

Dans le tableau ci-dessous sont rassemblés des exemples de compositions de mine selon la présente invention permettant d'obtenir les caractéristiques d'amélioration de la facilité de gommage, d'une bonne intensité de couleur et des propriétés mécaniques suffisantes pour être utilisées dans des crayons de couleur.

**Tableau 1**

| **Composition (% en poids) / exemple** | **N°1 bistre** | **N°2 Rouge** | **N°3 jaune** | **N°4 noir** | **N°5 vert St-Michel** |
|---|---|---|---|---|---|
| Polypropylène | 34,4 | 34,4 | 33,4 | 33,3 | 33,4 |
| Kaolin | 35,3 | 35,3 | 34,1 | 34,3 | 34,1 |
| Stéarate de calcium | 19,3 | 19,3 | 18,7 | 18,6 | 18,7 |
| Pigment enrobé de cire de polyéthylène | 5,5 | 7 | 10 | 10 | 6 |
| Additif | 5,5 | 4 | 3,8 | 3,8 | 7,8 |
| Total | 100 | 100 | 100 | 100 | 100 |

## Revendications

1. Mine de crayon de couleur, extrudable, non expansée, comprenant, en poids par rapport au poids total de la mine :
- entre 25 et 45 %, avantageusement entre 30 et 40 %, d'une polyoléfine;
- entre 25 et 50 %, avantageusement entre 30 et 40 %, d'une charge minérale incolore ;
- entre 4 et 20 %, avantageusement entre 5 et 15 %, d'un pigment enrobé par ou mélangé avec une cire de polyoléfine;
- entre 0 et 10 %, avantageusement entre 2 et 10 %, d'un additif et
- entre 10 et 30 %, avantageusement entre 15 et 25 % de stéarate choisi parmi le stéarate de magnésium, le stéarate de calcium et leur mélange.

2. Mine de crayon de couleur selon la revendication 1, **caractérisée en ce que** la polyoléfine est du polypropylène.

3. Mine de crayon de couleur selon l'une quelconque des revendications 1 ou 2, **caractérisée en ce que** la charge minérale incolore est choisie parmi une argile, du talc, du nitrure de bore, de la silice, du carbonate de calcium, du mica, de la poudre de stéatite et leurs mélanges, avantageusement il s'agit d'une argile.

4. Mine de crayon de couleur selon la revendication 3, **caractérisée en ce que** la charge minérale incolore est une charge minérale lamellaire, en particulier une argile choisie parmi la montmorillonite, la bentonite et le kaolin, avantageusement il s'agit du kaolin.

5. Mine de crayon de couleur selon l'une quelconque des revendications 1 à 4, **caractérisée en ce que** la teneur en pigment du pigment enrobé par ou mélangé avec une cire de polyoléfine est compris entre 25 et 65 %, avantageusement entre 30 et 60 %, en poids par rapport au poids total du pigment enrobé par ou mélangé avec une cire de polyoléfine.

6. Mine de crayon de couleur selon l'une quelconque des revendications 1 à 5, **caractérisée en ce que** le pigment est enrobé par une cire de polyoléfine, avantageusement **en ce que** la teneur en pigment est comprise entre 40 et 65 % en poids par rapport au poids total du pigment enrobé par une cire de polyoléfine.

7. Mine de crayon de couleur selon l'une quelconque des revendications 1 à 6, **caractérisée en ce que** la cire de polyoléfine est une cire de polyéthylène.

8. Mine de crayon de couleur selon l'une quelconque des revendications 1 à 7, **caractérisée en ce que** l'additif est choisi parmi les agents glissant, les agents de mise en oeuvre, les agents de couplage, les agents dispersants, les lubrifiants, d'autres pigments et leurs mélanges, avantageusement parmi le stéarate de zinc, une amide tel que l'éthylène bis stéaramide, les cires, les acides gras, le glycérol et ses dérivés tel que le béhénate de glycérol, le siloxane greffé sur du polypropylène, le titane rutile, le polypropylène greffé anhydride maléique et leurs mélanges.

9. Mine de crayon de couleur selon l'une quelconque des revendications 1 à 8, **caractérisée en ce qu'**elle ne comprend pas de plastifiant.

10. Mine de crayon de couleur selon l'une quelconque des revendications 1 à 9, **caractérisée en ce qu'**elle est extrudée.

11. Crayon de couleur comprenant une mine selon l'une quelconque des revendications 1 à 10.

## Patentansprüche

1. Nicht geschäumte, extrudierbare Farbstiftmine, umfassend bezogen auf das Gesamtgewicht der Mine:
- zwischen 25 und 45 %, vorteilhafterweise zwischen 30 und 40 %, eines Polyolefins,
- zwischen 25 und 50 %, vorteilhafterweise zwischen 30 und 40 %, eines farblosen mineralischen Füllstoffs,
- zwischen 4 und 20 %, vorteilhafterweise zwischen 5 und 15 %, eines mit einem Polyolefinwachs überzogenen oder gemischten Pigments,
- zwischen 0 und 10 %, vorteilhafterweise zwischen 2 und 10 %, eines Zusatzstoffs und
- zwischen 10 und 30 %, vorteilhafterweise zwischen 15 und 25 %, Stearat, das unter Magnesiumstearat, Kalziumstearat und ihrer Mischung ausgewählt ist.

2. Farbstiftmine nach Anspruch 1, **dadurch gekennzeichnet, dass** das Polyolefin Polypropylen ist.

3. Farbstiftmine nach einem der Ansprüche 1 oder 2, **dadurch gekennzeichnet, dass** der farblose mineralische Füllstoff unter einem von Ton, Talk, Bornitrid, Kieselerde, Kalziumkarbonat, Glimmer, Steatitpulver und ihren Mischungen ausgewählt ist, wobei es sich vorteilhafterweise um einen Ton handelt.

4. Farbstiftmine nach Anspruch 3, **dadurch gekennzeichnet, dass** der farblose mineralische Füllstoff ein lamellarer mineralischer Füllstoff ist, insbesondere ein Ton, der unter Montmorillonit, Bentonit und Kaolin ausgewählt ist, wobei es sich vorteilhafterweise um Kaolin handelt.

5. Farbstiftmine nach einem der Ansprüche 1 bis 4, **dadurch gekennzeichnet, dass** der Pigmentgehalt des mit einem Polyolefinwachs überzogenen oder gemischten Pigments zwischen 25 und 65 Gew.-%, vorteilhafterweise zwischen 30 und 60 Gew.-%, bezogen auf das Gesamtgewicht des mit einem Polyolefinwachs überzogenen oder gemischten Pigments enthalten ist.

6. Farbstiftmine nach einem der Ansprüche 1 bis 5, **dadurch gekennzeichnet, dass** das Pigment mit einem Polyolefinwachs überzogen ist, wobei der Pigmentgehalt vorteilhafterweise zwischen 40 und 65 Gew.-% bezogen auf das Gesamtgewicht des mit einem Polyolefinwachs überzogenen Pigments enthalten ist.

7. Farbstiftmine nach einem der Ansprüche 1 bis 6, **dadurch gekennzeichnet, dass** das Polyolefinwachs ein Polyethylenwachs ist.

8. Farbstiftmine nach einem der Ansprüche 1 bis 7, **dadurch gekennzeichnet, dass** der Zusatzstoff unter Gleitmitteln, Verarbeitungshilfsmitteln, Kopplungsmitteln, Dispersionsmitteln, Schmiermitteln, anderen Pigmenten und ihren Mischungen, vorteilhafterweise unter Zinkstearat, einem Amid, wie beispielsweise Ethylen-bis-Stearamid, Wachsen, Fettsäuren, Glyzerin und seinen Derivaten, wie beispielsweise Glyzerin-Behenat, polypropylen-gepfropftem Siloxan, Rutiltitan, maleinsäureanhydridgepfropftem Polypropylen und ihren Mischungen ausgewählt ist.

9. Farbstiftmine nach einem der Ansprüche 1 bis 8, **dadurch gekennzeichnet, dass** sie keinen Weichmacher umfasst.

10. Farbstiftmine nach einem der Ansprüche 1 bis 9, **dadurch gekennzeichnet, dass** sie extrudiert ist.

11. Farbstift, der eine Mine nach einem der Ansprüche 1 bis 10 umfasst.

## Claims

1. A non-expanded, extrudable color pencil lead, comprising, on a weight basis relative to the total weight of the lead:
- between 25 and 45%, advantageously between 30 and 40%, of a polyolefin;
- between 25 and 50%, advantageously between 30 and 40%, of a colorless mineral filler;
- between 4 and 20%, advantageously between 5 and 15%, of a pigment coated or mixed with a polyolefin wax;
- between 0 and 10%, advantageously between 2 and 10%, of an additive and
- between 10 and 30%, advantageously between 15 and 25%, of stearate chosen from magnesium stearate, calcium stearate, and a mixture thereof.

2. The color pencil lead as claimed in claim 1, **characterized in that** the polyolefin is polypropylene.

3. The color pencil lead as claimed in either of claims 1 and 2, **characterized in that** the colorless mineral filler is chosen from a clay, talc, boron nitride, silica, calcium carbonate, mica, steatite powder, and mixtures thereof, and is advantageously a clay.

4. The color pencil lead as claimed in claim 3, **characterized in that** the colorless mineral filler is a lamellar mineral filler, in particular a clay chosen from montmorillonite, bentonite and kaolin, and is advantageously kaolin.

5. The color pencil lead as claimed in any one of claims 1 to 4, **characterized in that** the pigment content of the pigment coated with or mixed with a polyolefin wax is between 25 and 65%, advantageously between 30 and 60% by weight, relative to the total weight of the pigment coated with or mixed with a polyolefin wax.

6. The color pencil lead as claimed in any one of claims 1 to 5, **characterized in that** the pigment is coated with a polyolefin wax, advantageously **in that** the pigment content is between 40 and 65% by weight, relative to the total weight of the pigment coated with a polyolefin wax.

7. The color pencil lead as claimed in any one of claims 1 to 6, **characterized in that** the polyolefin wax is a polyethylene wax.

8. The color pencil lead as claimed in any one of claims 1 to 7, **characterized in that** the additive is chosen from glidants, processing agents, coupling agents, dispersants, lubricants, other pigments, and mixtures thereof, advantageously from zinc stearate, an amide such as ethylenebisstearamide, waxes, fatty acids, glycerols and derivatives thereof such as glyceryl behenate, siloxane grafted onto polypropylene, rutile titanium, maleic anhydride-grafted polypropylene, and mixtures thereof.

9. The color pencil lead as claimed in any one of claims 1 to 8, **characterized in that** it does not comprise any plasticizer.

10. The color pencil lead as claimed in any one of claims 1 to 9, **characterized in that** it is extruded.

11. A color pencil comprising a lead as claimed in any one of claims 1 to 10.
